# EUROPEAN PATENT APPLICATION

(11) **EP 4 439 337 A1**
(43) Date of publication of application: **02.10.2024**
(21) Application number: 23165804.8
(22) Date of filing: 31.03.2023
(51) Int. Cl.: G06F 16/84

(54) **METHOD TO ENABLE AUTONOMOUS FACTORIES BY ENCODING MANUFACTURING DOMAIN KNOWLEDGE IN A NETWORK OF EXTENSIBLE AND CONFIGURABLE ONTOLOGIES**

(71) Applicant: Siemens Aktiengesellschaft, 80333 München (DE); Siemens Industry Software Inc., Plano, TX 75024 (US)
(72) Inventor: Corsini, Giorgio, 16148 Genova (IT); Neill, Stephen, Matthews, 28104 (US); Rohde, Wolfgang, Marvin, 28173 (US); Venturi, Giovanni, 16136 Genova (IT)
(74) Representative: Siemens Patent Attorneys

(57) **Abstract**

Thus, it is the objective of the present invention to define a method that uses semantic technology to manage a single abstract level data model of different applications and automatize the process of producing the interoperability rules among different manufacturing sites.

This objective is achieved according to the present invention by a method for enabling MOM systems for autonomous factories by encoding manufacturing domain knowledge in a democratic network of extensible and configurable ontologies,
said method comprising the steps of:
a) defining an ontology of a MOM domain through a semantic conceptualization of the manufacturing domain knowledge;
b) representing the ontology through a least one knowledge graph;
c) implementing the ontology in owl format;
d) providing a web-based framework to provide a set of intuitive user friendly user interfaces to navigate the ontology and associate concepts comprised in the ontology to logical data structures coming from existing applications that are comprised in the MOM systems;
e) mapping of the logical data structures through semantic matches of the semantic conceptualization;
f) generating an interoperability code between the data structures of different applications thereby mapping data structure of the different applications within the same MOM system and/or over a number of distributed MOM systems of the autonomous factories.

## Description

The present invention relates to a method to enable autonomous factories by encoding manufacturing domain knowledge in a network of extensible and configurable ontologies.

In the world of process automation and process monitoring standard automation systems for controlling the widest conceivable variety of production resources, machines and plants (MOM objects) are state of the art. Such technology covers in particular a broad range of products which are offered by the Siemens Corp. under its OpCenter^{®} product family with the field of manufacturing operation management (MOM). An extensive line of products for solving the technical tasks in question such as counting, measuring, positioning, motion control, closed-loop control and cam control enhance the performance capabilities of appropriate process controllers. A variety of configurations enable the implementation of flexible machine concepts.

In this context a broad range of IT solutions exist to connect the actual hardware close to the technical and/or logistical process to the application layer of the client driving the installation. Manufacturing execution systems (MES) have therefore been developed to meet all of the requirements of a service-oriented architecture (SOA) to integrate seamlessly into a totally integrated automation (TIA). A plug & play architecture, in which the individual functions can be configured and easily combined with each other thereby forms the basis for this success thereby simplifying the complex structures of controlling a manufacturing plant or the like.

Thus, manufacturing companies have faced different challenges, prominently with increasing variability in several dimensions. These dimensions include product characteristics, production volume, production process, manufacturing technology, customer behavior and supplier strategy, and even transformation processes for entire industrial domains. This trend is still accelerating, directly impacting the value chain and its related physical supply chains, as well as factory design and management.

It is a common opinion that in order to face these challenges and continue to be competitive successfully, companies need to embrace digitalization of all the processes, non-limited to production lines but turn digital all the value chain: from customer order to product delivery, with a seamless information flow. Digitalization's impact on the industrial process is so significant that it is considered not an improvement but a revolutionary step in industrial history. A specific term was introduced to identify it: Industry 4.0. The vision of Industry 4.0 is to turn traditional plants into intelligent factories where the process is managed by software applications that link seamless business, production, logistics, and R&D in a holistic system. Siemens^{®} is following this trend by envisioning the Autonomous Factory concept, focused on highly flexible, resilient, sustainable and self-organizing production of the future.

At the base of this revolution, there is, of course, data. Data must be processed, exchanged, imported, displayed, and aggregated to make manufacturing run successfully.

The big problem of data management in a complex scenario is that they all have to be processed in the same way by the players, but they are usually coded in different formats. Differentiation of data format is one of the significant problems that prevent seamless application integration and raise the cost of deployment of complex systems.

Also, for software vendors, it is difficult to harmonize the data model of their applications, sometimes between different versions of the same software, which is a significant problem that brakes innovation and raises development and maintenance costs.

Semantic technologies could offer a solution to mitigate the problem and reduce costs. Semantic technology associates semantic meaning to the data structure in a way that both humans and machines can understand. For humans, be they users, developers, system integrators, or data analysts, this feature facilitates the understanding of information and improves productivity, for the machine allows to the process of data with the same semantic meaning but in a different format homogeneously.

Semantic Modelling can facilitate the usage and distribution of data as they allow a single, semantic-based way to manage data in a different format. The traditional way to manage data coded in a different format is through a message broker, also called Enterprise Application integration. This additional application translates data structures from one format to another. The application is typically connected with the broker via a connector that can be specific, i.e., designed and implemented ad hoc for the application, or general purpose, e.g., using a standard format, wherein the typical case in industrial automation is Business to Manufacturing Markup Language - B2MML, i.e., a set of XML schemas that implement the data model in the ISA-95 Standard.

The traditional approach has some constraints: the connector maps the application data model to an internal model (Canonical Data Model); at run time, the communication between applications requires two transformations: one for the incoming data from the original data model to the canonical data model, the other for the outgoing data from the canonical data model to the destination model. The development of connectors needs the complete knowledge of the application data model and once developed, is linked to a specific release of the model. It is expensive to create, difficult to maintain and performs poorly.

Thus, it is the objective of the present invention to define a method that uses semantic technology to manage a single abstract level data model of different applications and automatize the process of producing the interoperability rules when necessary.

This objective is achieved according to the present invention by a method for enabling MOM systems for autonomous factories by encoding manufacturing domain knowledge in a democratic network of extensible and configurable ontologies,
said method comprising the steps of:
a) defining an ontology of a MOM domain through a semantic conceptualization of the manufacturing domain knowledge;
b) representing the ontology through a least one knowledge graph;
c) implementing the ontology in owl format;
d) providing a web-based framework to provide a set of intuitive user friendly user interfaces to navigate the ontology and associate concepts comprised in the ontology to logical data structures coming from existing applications that are comprised in the MOM systems;
e) mapping of the logical data structures through semantic matches of the semantic conceptualization;
f) generating an interoperability code between the data structures of different applications thereby mapping data structure of the different applications within the same MOM system and/or over a number of distributed MOM systems of the autonomous factories.

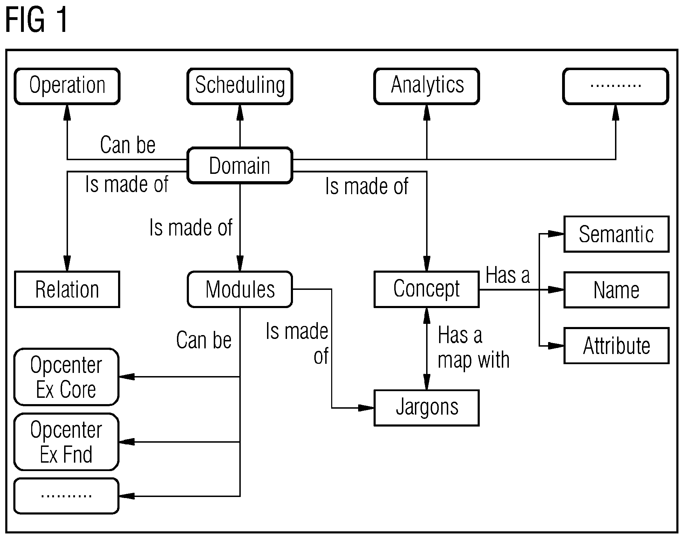

This method therefore offers a better value for multi-plant solutions by decreasing the TCO. In practice, the same number of servers that is in the prior art needed to host the MES/MOM solution serving a single manufacturing plant is now made available to manage multiple plants (as represented in Figure 1). This set of servers constitutes a single MES/MONM solution distributed environment and is hosted by the same regional hub or anyway a single "virtual datacenter", according to the features provided by Cloud providers, in case a public Cloud deployment is chosen.

Preferred embodiments of the present invention are given in the additional claims.

Preferred embodiments are hereinafter described in more detail with reference to the attached drawings which depict in:
- Figure 1: schematically the organization of a semantic catalogue information for the purpose of a definition of a data ontology in a MOM system;
- Figure 2: schematically an example of concepts relates to the MOM Domain;
- Figure 3: schematically an example of a knowledge graph for the equipment concept in the MOM ontology;

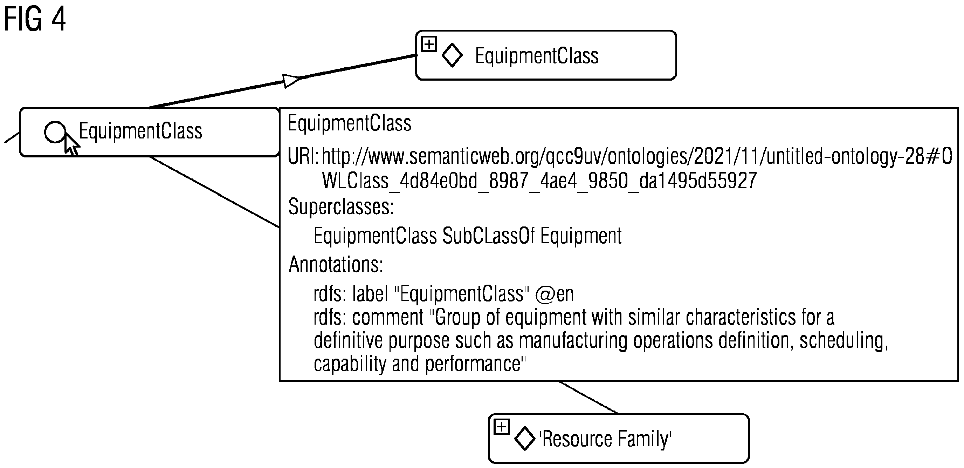

- Figure 4: schematically RDF description of "EquipmentClass" concept;
- Figure 5: schematically an abstraction relation from the MOM ontology to the physical data model in the MOM system;
- Figure 6: schematically a number of operations supported in the UI's that allow the user to access, query, and navigate the ontology and the knowledge graphs;
- Figure 7: schematically an example of an auto-generated C# code using Microsoft's Roslyn .NET compiling tool starting from the concepts maps; and
- Figure 8: schematically an example of the application of the ontology concept when sharing data among two factories A and B.

The present invention is part of an MES/MOM solution, such as distributed under the trade name of Opcenter^{®} EX FN by the Siemens^{®} AG and aims at providing a better value for multi-plant solutions by increasing the data operability over different applications and systems/tool/resources in a manufacturing entity.

In particular, the present invention defines a method that uses semantic technology to manage a single abstract level data model of different applications and automatize the process of producing the interoperability rules when necessary. Writing the interoperability code between applications has always been one of the most expensive and error-prone activities in developing distributed systems such as modern MOM systems. Now, this process can be automated starting from the semantic description of the information that must be exchanged between the Apps. As a first step, it is necessary to define the correspondences between the concepts available in the semantic model and the corresponding data models of the systems that must interoperate. Following this configuration, the system can automatically generate the necessary code to allow the Apps to exchange information.

The advantage of this approach is that it cuts down on human design time, speeds up development, and reduces errors. To make the ontology's usage and management possible in a friendly way, the present invention also includes a web application with several User Interfaces that allow the user to easily access, query, and navigate the ontology and the knowledge graphs.

In the world of the manufacturing execution system (manufacturing operation management), the ontology encompasses a representation, formal naming, and definition of the categories, properties, and relations between the concepts, data, and entities that substantiate one, many, or all domains of discourse. This ontology concept is strongly regulated by the ANSI/ISA-95 Standard. Thus, the ontology is a way of showing the properties of a subject area, such as an autonomous factory, and how they are related, by defining a set of concepts and categories that represent the subject (factory). Contemporary ontologies of different manufacturing sites share many structural similarities, regardless of the language in which they are expressed. Most ontologies describe individuals (instances), classes (concepts), attributes and relations. In the following each of these components is discussed briefly.

Common components of ontologies include:
a) Individuals
   Instances or objects (the basic or "ground level" objects)
b) Classes
   Sets, collections, concepts, classes in programming, types of objects or kinds of things
c) Attributes
   Aspects, properties, features, characteristics or parameters that objects (and classes) can have
d) Relations
   Ways in which classes and individuals can be related to one another
e) Function terms
   Complex structures formed from certain relations that can be used in place of an individual term in a statement
f) Restrictions
   Formally stated descriptions of what must be true in order for some assertion to be accepted as input
g) Rules
   Statements in the form of an if-then (antecedent-consequent) sentence that describe the logical inferences that can be drawn from an assertion in a particular form
h) Axioms
   Assertions (including rules) in a logical form that together comprise the overall theory that the ontology describes in its domain of application. This definition differs from that of "axioms" in generative grammar and formal logic. In those disciplines, axioms include only statements asserted as a priori knowledge. As used here, "axioms" also include the theory derived from axiomatic statements
i) Events
   The changing of attributes or relations

Ontologies are commonly encoded using ontology languages, i.e. owl files. Ontology editors are applications designed to assist in the creation or manipulation of ontologies. It is common for ontology editors to use one or more ontology languages. Aspects of ontology editors include: visual navigation possibilities within the domain knowledge model, inference engines and information extraction; support for modules; the import and export of foreign knowledge representation languages for ontology matching; and the support of meta-ontologies such as OWL-S, Dublin Core, etc.

The present invention here defines a method to manage data models of different apps of the MOM domain using ontology and knowledge graphs. It provides a complete, user-friendly framework to support the navigation of the ontology, the association of semantic concepts to application data structures, the creation of interoperability rules between different applications, and the auto-generation of API code for interoperability.

The main concepts of the present invention are:
- Definition of an ontology of MOM domain through semantic conceptualization
- Representation of the ontology through the knowledge graph
- Implementation of the ontology in owl format.
- Realization of a web-based framework to provide a set of user-friendly UIs to navigate the ontology and associate concepts to logical data structures coming from existing applications
- Mapping of data structures through semantic
- Auto-generation of the interoperability code between data structures of different applications

### MOM Knowledge Base definition and representation through semantic graphs

In information technology, the representation of the knowledge base of an application domain is the ontology of that domain. A dictionary defines concepts, the semantic description of the images, and the relations among concepts (taxonomy). It can be visually represented as a knowledge graph, where the pictures are the nodes of the chart, and the connections are the links between the nodes.

As mentioned above, an ontology can be made of the following notions:
- Concepts
- Terminology to identify the concepts, it is made by a vocabulary and its jargon
- Semantic description of the concept
- Properties
- Verbs (an action that a command can perform on a concept)
- Relations (between concepts)
- Rules (conversion, processing, and validation)

In the MOM application domain, the concepts are those related to manufacturing. Here, the ISA-95 standard is used as a reference for the vocabulary of the images. ISA-95 offers consistent terminology to support communications in manufacturing operations and provides an operating model that explains the semantics of the language.

A MOM application domain is further filtered into sub-domains according to operations type (i.e., manufacturing execution, quality evaluation, logistics, etc.) and application type (e.g., automotive, aerospace, CPG, etc.) to better focus on the operative conditions.

Figure 1 below summarizes the organization of information in the MOM ontology.

The global MOM domain of self-consistent operational fields can be grouped, for example like execution, quality assurance, intra-plant logistics, warehouse, etc. Each sub-domain can be further subdivided according to the manufacturing type, like discrete, process, pharma, etc. As shown in Figure 1, the domain itself is made by a concept and a relation. The image has a semantic association, terminology (name), and some attribute. A single idea can have associated with some jargon according to the application implementation. Finally, a domain has a software implementation that is an application of the Opcenter family (Execution Core, Execution Discrete, Modular MOM, etc.) .

Here, the ontology is implemented using the RDF format (RDF = Resource Description Framework). In RDF, a concept is expressed as a set of the so-called "triple", three entities that codify a statement about semantic data in the form of subject-predicate-object expressions. In particular, the following RDF fields are filled:
Label: for concept terminology
Comment: for semantic description
IsDefinedBy: for domain definition
Class/Subclass: for concept hierarchy
Individual: for jargons association
Type: for the concept to data structure association
ObjectProperty: for personal and relational definitions

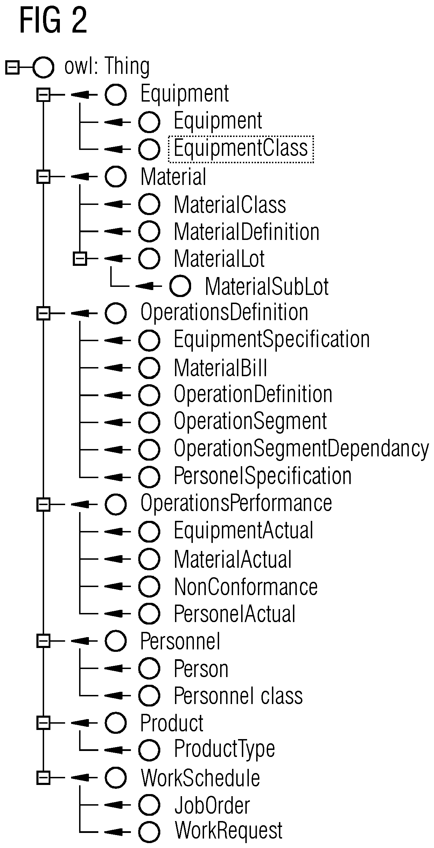

The complete ontology is provided in the form of an owl file (OWL = W3C Web Ontology Language). Making semantic queries to the catalog accocatalogSPARQL syntax is possible. Figure 2 and the following provide an example of implementing the knowledge base and the knowledge graphs.

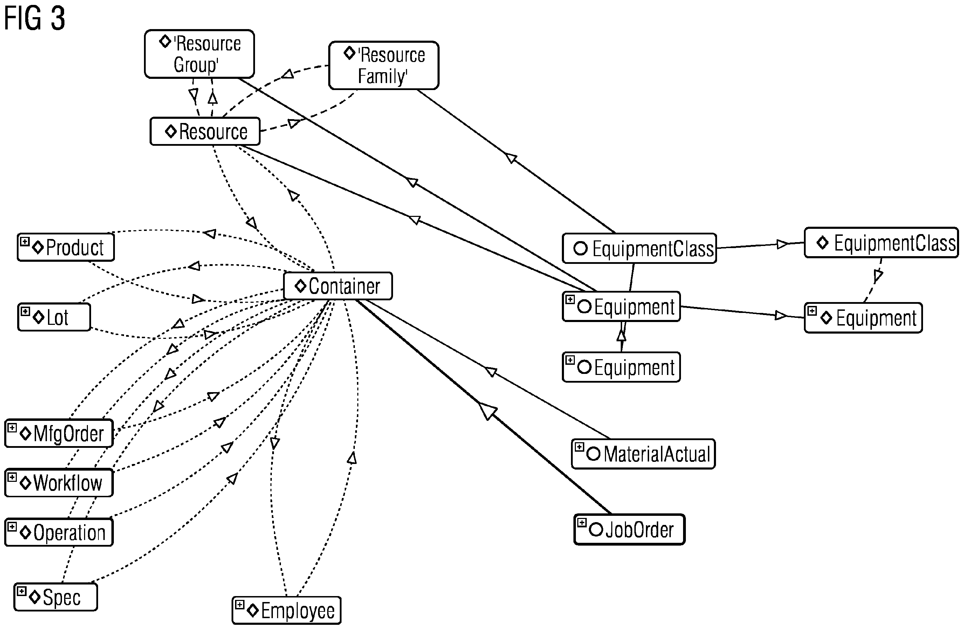

Figure 3 represents schematically an example of a knowledge graph for the equipment concept within the MOM ontology. The light-grey dot box are the concepts, the dark-grey dot box are the application jargons, Execution Discrete Jargon on the right side, Opcenter Execution Core Jargons on the left side. Figure 1 schematically represent the RDF description of "EquipmentClass" concept accordingly.

### Mapping ontology with the logical application model

The ontology represents the formalization of the knowledge base at the abstract level. To be machine-readable, it has to be transformed first into a logical data model in the form of data structures and finally into a physical data model in the form of tables and records. The ontology is an abstract formalization of the knowledge base associated with an application domain that is general and consistent in time; a logical data model is a formalization of the data structure associated with a software version of an application and can vary according to the performance, the physical model is a data organization associated to a software build and is specific of that build.

The last step is performed by the compiler of the computer language used by the application. The first step can be done directly or indirectly by a software tool.

Direct transformation is done to create from ontology a new application logical model. Immediate change creates a new data structure of the analytical model from the ontology classes and subclasses; there are several tools in the market able to perform this step. The indirect transformation associates the ontology concept to the data structure of an already implemented logical model of an existing application.

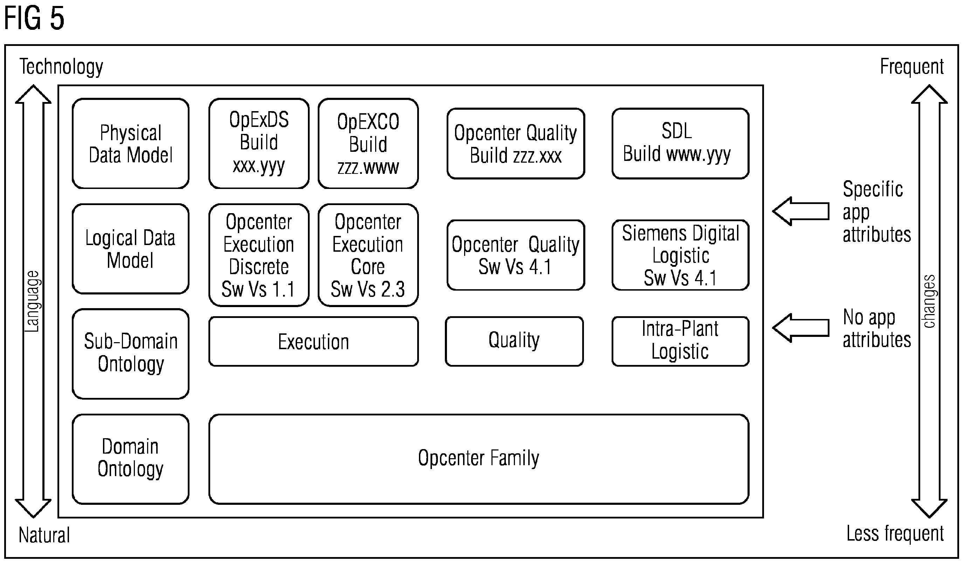

This is the focus of the invention, as such a tool does not exist in the market. This tool allows management through semantic and knowledge graphs of the logical model of one or more existing applications adding the advantage of semantic management without requiring a change in the analytical models. Thus, Fig. 5 represents an abstraction relation from the MOM ontology to the physical data model present in the respective MOM system.

Part of the present invention is a web application that loads the ontology and the logical data model of one or more applications, performs the automatic association between the concepts in the ontology and the data structures of the analytical models. This web application further provides at least one UI to navigate the ontology, the data model and operates then on this information. The following section will describe the web application in detail.

The mapping between the application data model and the Conceptual Model in the ontology is performed by a likelihood algorithm that provides the association between the entities of the application data model and the structure of the Conceptual Model (Concept Map). In the present example, the likelihood algorithm is based on string distance and implements three types of spaces (Hamming Distance, Levenshtein Distance & Damerau-Levenshtein Distance). The Levenshtein distance is a string metric for measuring the difference between two sequences of characters. The Levenshtein space between two words is the minimum number of single-character edits (i.e., insertions, deletions, or substitutions) required to change one word into another. It is named after Vladimir Levenshtein. The likelihood algorithm allows the use of jargon associated with the same concepts to broaden the likelihood association.

The likelihood algorithm also provides a degree of confidence to the automatic mapping. The relations can be of type 1:1, 1: N, N:1, N: M. Typically, there is a Concept Map for each application that needs interoperability. The mapping is proposed to the user through a visual interface (UI) for validation. The user can confirm the automatic mapping or can manually make some corrections. The user can add jargon to the data model to drive future association.

### User-friendly Web-framework for knowledge base representation

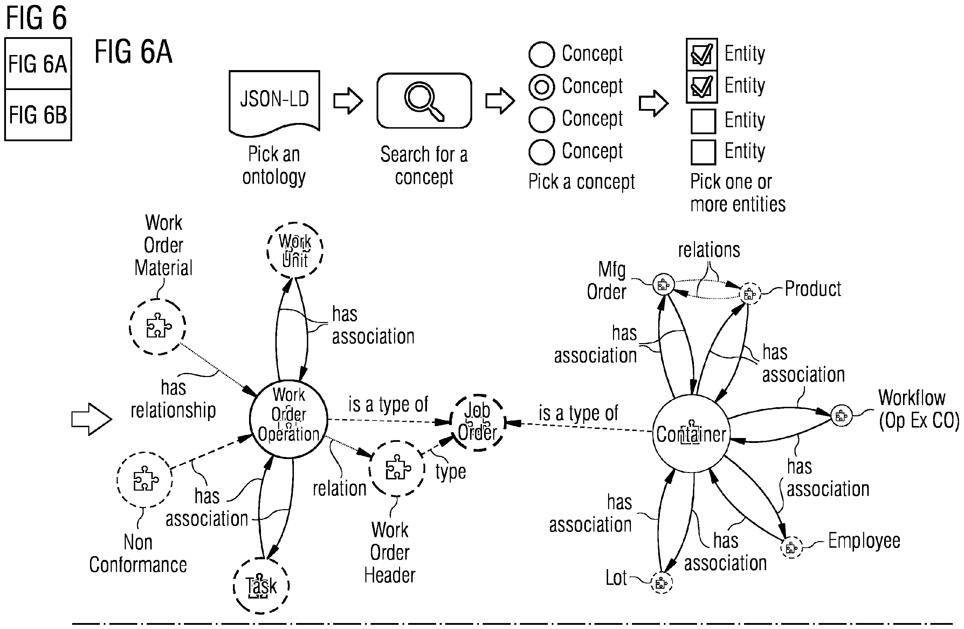

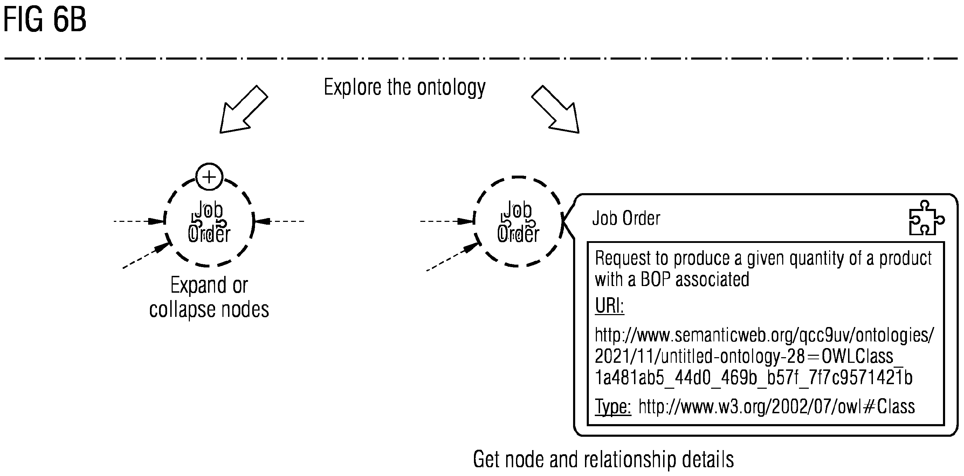

To make the ontology's usage and management possible, a framework has been implemented that is created by a web application with several User Interfaces (UI's) that allow the user to access, query, and navigate the ontology and the knowledge graphs. Figure 6 illustrates exemplarily a number of operations supported in the UI's.

The main goal of the user interface is to provide a natural and intuitive way of exploring the ontology while shielding the user from the technical aspects, such as executing SPARQL queries, etc.

The user starts by selecting an ontology model. Using standard terms, the user searches for a concept he/she is interested in, for example, "Work Order."

The user is then presented with a list of concepts that match his/her search. The images are listed in order of most to least relevant. Each idea is an OWL Class.

After selecting a concept from the list, the user is presented with a list of entities grouped by "domains" where each entity is an OWL NamedInstance and domains are RDF isDefinedBy strings.

The user selects zero or one entity from each domain and is presented with a visualization of the appointed entities.

The visualization is presented as a force-directed graph of nodes (the classes and entities) connected by edges (the relationships between entities). Initially, the selected entities are shown to be connected to their immediate next-level neighbors. This initial view is configurable by adjusting a "depth" parameter. Nodes may be expanded or collapsed to reveal/conceal more of the ontology.

Detailed information (such as description, type, and URI) on each class, entity, and connecting relationship can be shown in a popup after clicking on the item.

### Auto generation of Interoperability code and automatic API creation

The relation between the concepts of the ontology and the logical data structure of the application defined in the previous sections allows the automatic generation of interoperability rules to exchange consistent data in a different application. In fact, if two structures in two different application logical models refer to the same concept, it is easy to find the mapping rules for the transitive property. The interoperability mapping can be done automatically in the case of a 1:1 relation between concept and data structure. Manual validation is necessary to solve the conflict in the case on N:1, 1:N, or N: N relation.

The mapping is done in the web application tool, and the API generation is provided in the form of C# code and dll-binary. The automatic generation of the code is done using Microsoft Roslyn .NET compiling tool.

Figure 2 examplarily shows an Auto-generated C# code using Roslyn .NET compiling tool starting from the concept maps; together with the code, also the associated binary dll is auto generated.

### Application Examples

This section provides practical examples of how the invention could produce a value into typical industrial use cases.

### Cross-Industry Information management

Manufacturing execution presents some differences and peculiarities according to the industrial segment of the application, i.e., discrete industries, process industries, food&beverage industries, life science industries, complex manufacturing, etc. Other differences can come from national regulations, customer-specific conditions, etc. The organization of the information presented in Figure 1 alone is efficient and flexible information mandating fact. The base of the application domains can be separated with different re-presentation of the other. At the top is a general ontology valid for each industrial segment and condition. Industry-specific information can be represented in an element-specific ontology that can be associated as an extension of the common ontology to form the complete segment ontology. This kind of representation can be further iterated, for example, with county-specific and customer-specific ontology to get a complete formalization of the customer knowledge base and reuse most of the general knowledge base.

A practical example can be the definition of an operation. The process operation is defined at the general ontology level, the sequence of operations is determined at the segment ontology level, and the type of operation can be defined at customer-specific ontology. This way, most of the information can be reused, only the customer-specific extension must be implemented for each new project.

### Interoperability in a distributed hierarchical system

A customer can operate in a distributed hierarchical environment where the orders are managed at a central level while the executions are done in several geographically distributed plants/factories. Each plant may have a manufacturing management system slightly different; for instance, a separate release of a given product or a completely different effect. In this situation, the flow of information from the central system to the final design can be complex and requires ad-hoc modifications. These difficulties are solved with the ontology management of information and the automatic generation of the interoperability rules.

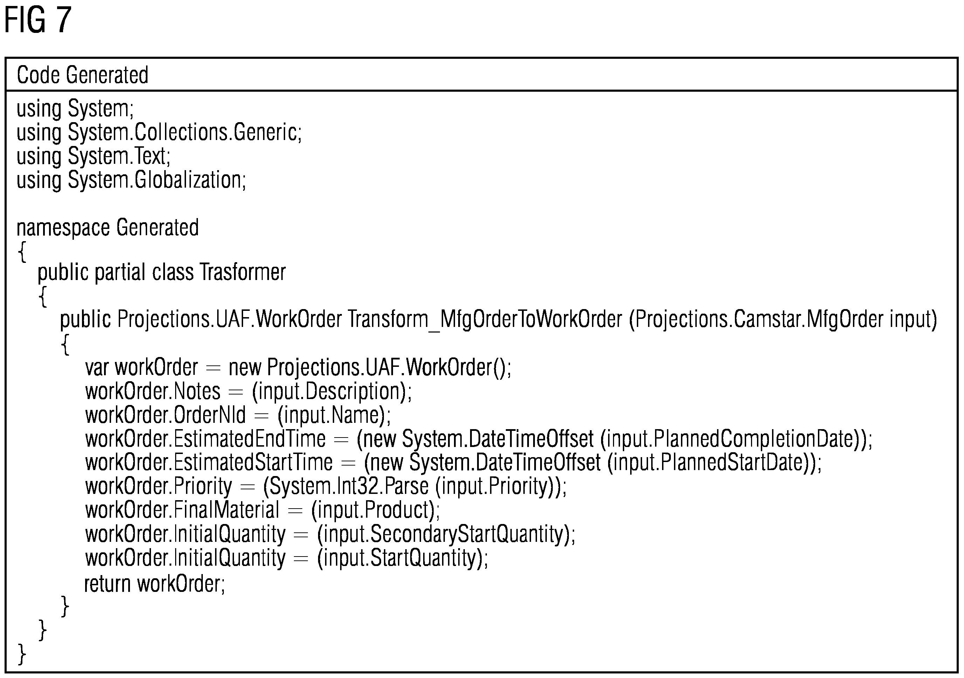

The ontology assures that data refers to the same semantic meaning in all the organizational data in different systems, as shown in Figure 6, making possible the automatic generation of the interoperability rules as shown in Figure 7 and so the seamless flow of information through the whole hierarchical system.

### Specific example for the interoperability rule generation of two factories A and B

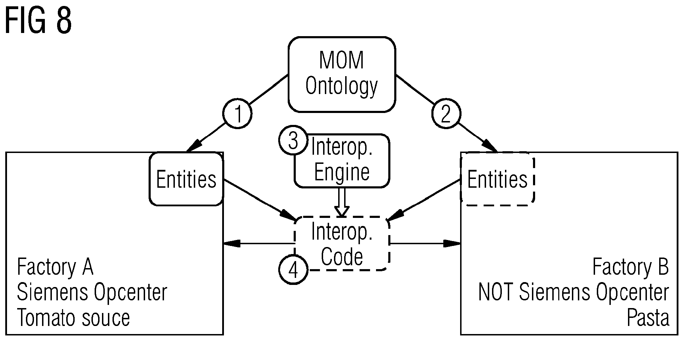

Figure 8 shows a specific example for the interoperability rule generation of two factories A and B. Factory A is producing tomato soup in cans and uses an MES from a first MES software provider, for example Siemens^{®} with its Opcenter^{®} software family. Factory B is producing convenience food in terms of pasta dishes with different sauces, such as tomato or vegetable sauce. Factory B is controlled by an MES from a second MES software provider. Let us now assume the situation that factory B shall exchange information with factory A, for example, at the level of the management of the purchase of the various ingredients for the respective products. It is clear from this specific example that the two factories required to a certain extent the same ingredients, such as tomatoes, herbs, spices, water etc. Thus, the two factories A and B want to exchange information on the consumption of these ingredients in their respective productions.

Accordingly, also the resources used in thess productions are of similar scope, such as mixers, heaters, dosing devices, packaging and the like. Thus, it could be also desirable that the ERP system receive some information of the usage and energy consumption of these resources to identify the KPI of the production, for example for a specific production lot.

To solve this task, figure 8 represents a flow of activities according to the present invention. At step 1, the typical MOM/MES ontologies and the relations for this segment of the food&beverage industries are provided to the factory A quasi out-of-the-box. At step 2, the concepts of the MOM/MES ontology are then linked to the entities that are managed by the second MES system in the factory B. At step 3, the code generation engine automatically generates the interoperability code enabling the two MES systems to exchange data among their respective entities without invoking the need to the user to write/develop his own code. At step 4, during the run time the interoperability code is used to effect eventually the interaction between the two MES systems thereby enabling a data exchange for example in terms of the consumption of ingredients, the remaining stocks of the ingredients, energy consumption, maintenance activites and the like.

Thus, the presented invention introduces a method to manage data at conceptual level with the use of the MOM/MES ontology and the semantics used. This method simplifies the work of users at all the levels, as to deal with concept is easier for humans than deals with data structure and at the same time allows automatization of processes as ontologies can be processed from both humans and machines. With this method a solution is implemented being devoted to automatizing multi-application data management in the manufacturing software domain.

The main advantages regarding the mainstream solution as mentioned in the introduction are as follows:

The present method allows conceptual management of data in a multi-applications environment. Data can be managed in a single way despite their actual implementation in the applications. Machine-readable abstract models are provided that can be automatically converted in an application data model. Further, the method provides an user-friendly tool to navigate the ontology. Auto-generated code is provided to achieve the interoperability between applications of the same domain but with different data model. Thus, the time and effort of the development cycle can be shortened for the development teams and the customers/users.

Siemens is a leader provider of Manufacturing Operations Management (MOM) systems with different suites that cover all the segment of the MOM market. As the portfolio was built up through acquisition of different companies and the integration of heterogeneous products, Siemens has experimented the difficulties to the traditional integration of different data models. The use of ontologies and semantics can facilitate the data management of the applications, providing better solution with a decreasing of integration costs. Moreover, the semantic management of data can facilitate the balance in the portfolio of new products and mature applications. Finally, the semantic data management can facilitate the integration with third part products increasing the value of the offer creating more value to its customer at a reduced cost.

## Claims

1. A method for enabling MOM systems for autonomous factories by encoding manufacturing domain knowledge in a democratic network of extensible and configurable ontologies,
comprising the steps of:
a) defining an ontology of a MOM domain through a semantic conceptualization of the manufacturing domain knowledge;
b) representing the ontology through a least one knowledge graph;
c) implementing the ontology in owl format;
d) providing a web-based framework to provide a set of intuitive user friendly user interfaces to navigate the ontology and associate concepts comprised in the ontology to logical data structures coming from existing applications that are comprised in the MOM systems;
e) mapping of the logical data structures through semantic matches of the semantic conceptualization;
f) generating an interoperability code between the data structures of different applications thereby mapping data structure of the different applications within the same MOM system and/or over a number of distributed MOM systems of the autonomous factories.

2. The method according to claim 1, wherein an ontology comprises one of more of the following notions:
i) concepts
ii) terminology to identify the concepts, preferably made by a vocabulary and its jargon
iii) semantic description of the concept
iv) properties
v) verbs, in particular representing an action that a command can perform on a concept
vi) relations, in particular between concepts
vii) rules such as rules for data conversion, data processing, and data validation.

3. The method according to claim 1 or 2, wherein the ontology is implemented using the RDF format (RDF = Resource Description Framework) wherein in RDF, the concept is expressed as a set of the so-called "triple," three entities that codify a statement about semantic data in the form of subject-predicate-object expressions.

4. The method according to any of the preceding claims, wherein the following RDF fields are filled to express a concept:
i) Label: for concept terminology
ii) Comment: for semantic description
iii) IsDefinedBy: for domain definition
iv) Class/Subclass: for concept hierarchy
v) Individual: for jargons association
vi) Type: for the concept to data structure association
vii) ObjectProperty: for personal and relational definitions.
